(19) 

**Europäisches Patentamt**
**European Patent Office**
**Office européen des brevets**

(11)  **EP 4 624 008 A1**

(12) **EUROPEAN PATENT APPLICATION**

(43) Date of publication:
**01.10.2025  Bulletin 2025/40**

(21) Application number: **24386033.5**

(22) Date of filing: **26.03.2024**

(51) International Patent Classification (IPC):
**A63F 13/355** (2014.01)  **G06T 15/00** (2011.01)

(52) Cooperative Patent Classification (CPC):
**A63F 13/355; G06T 15/00; G06T 15/005;**
A63F 2300/538; A63F 2300/66

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Sony Interactive Entertainment Europe
Limited**
**London W1F 7LP (GB)**

(72) Inventors:
• **Lim, Jia-Jie**
**London, E14 5HU (GB)**

• **Treder, Matthias**
**London, E14 5HU (GB)**
• **Chadha, Aaron**
**London, E14 5HU (GB)**
• **Bigos, Andrew James**
**London, E14 5HU (GB)**
• **Andreopoulos, Ioannis**
**London, E14 5HU (GB)**

(74) Representative: **Gill Jennings & Every LLP**
**The Broadgate Tower**
**20 Primrose Street**
**London EC2A 2ES (GB)**

(54)  **GENERATING A RENDERED IMAGE OF A SCENE**

(57)  A method is provided for generating a rendered image of a scene, the scene comprising one or more scene assets. A selected one of first scene asset data and second scene asset data is transmitted from a server to a user device, to enable the user device to generate a rendered image of the scene. The first scene asset data is useable by the user device to render the scene asset. The second scene asset data represents a rendering of the scene asset generated by the server. The selection is performed on the basis of a resource characteristic of the user device.

700

710  Receive data representing scene

720  Determine selected one of first scene asset
data and second scene asset data

730  Transmit selected one of first scene asset
data and second scene asset data to user
device

Fig. 7

**Description**

<u>Technical Field</u>

The present disclosure concerns computer-implemented methods for generating rendered images of scenes. Particularly, but not exclusively, the present disclosure concerns computer-implemented methods for generating rendered videos of video game scenes.

<u>Background</u>

Rendering images or videos is a key component in many applications. For example, online gaming or virtual reality, VR, applications, which are increasingly popular forms of entertainment and social activity, involve the rendering of video scenes for display to a user. Rendering is a process of generating an image from a two-dimensional or three-dimensional model. Such a model may be referred to as a scene asset, and may represent, for example, one or more characters or objects that are to be depicted in a video scene. A given video scene may include a plurality of such models to be rendered.

Online gaming and VR applications are typically implemented with a server in communication with a user device. This may be referred to as 'cloud-based' gaming or VR. The user device (also referred to as a 'client device' or 'displaying device') may be, for example, a mobile phone, a personal computer, a VR headset, a games console, etc. In known systems, scene content is fully rendered on the server and then streamed as encoded video to the user device. Some user devices lack the processing and/or memory resources for rendering scene content (particularly in real-time), and therefore rendering the scene content on the server caters for such constrained user devices. However, such systems may require substantial network bandwidth for streaming rendered video from the server to the user device.

The present disclosure seeks to solve or mitigate some or all of these above-mentioned problems. Alternatively and/or additionally, aspects of the present disclosure seek to provide improved methods for generating rendered images of scenes.

<u>Summary</u>

In accordance with a first aspect of the present disclosure there is provided a computer-implemented method for generating a rendered image of a scene, the scene comprising one or more scene assets, the method comprising, at a server operable to communicate with a user device:

> receiving data representing a scene, the scene including a scene asset to be rendered;
> determining a selected one of first scene asset data and second scene asset data to transmit to the user device, the first scene asset data being useable by the user device to render the scene asset, the second scene asset data representing a rendering of the scene asset generated by the server, wherein the selection is performed on the basis of a resource characteristic of the user device; and
> transmitting, to the user device, the selected one of the first scene asset data and the second scene asset data, to enable the user device to generate a rendered image of the scene.

By determining a selected one of the first scene asset data and the second scene asset data and transmitting the selected one to the user device, the scene asset may be rendered on either the server or on the user device itself. In particular, the selection is performed on the basis of (i.e. using) a resource characteristic of the user device. For example, if the user device is determined to have sufficient resources for rendering the scene asset locally, the first scene asset data may be sent to allow the user device to render the scene asset. On the other hand, if the user device is determined not to have sufficient resources for rendering the scene asset locally, the second scene asset data may instead be sent (representing a rendering of the scene asset generated by the server).

The resource characteristic of the user device may have or be a value (e.g. an amount of processing or memory resources of the user device), and the selection is performed using that value. That is, the selection may have a first outcome if the resource characteristic of the user device has a first value, and a second outcome if the resource characteristic of the user device has a second value. As such, the selection is performed using the value of the resource characteristic of the user device. The resource characteristic may be fixed for a given user device (e.g. a total amount of memory installed on the user device), or may be time-varying (e.g. an amount of memory that is currently available, in view of other processes performed on the user device). In embodiments, the resource characteristic of the user device comprises one or more of: processing resources of the user device, memory resources of the user device, and bandwidth resources available to the user device. As such, if the user device has sufficient processing and/or memory resources for rendering the scene asset locally, the first scene asset data may be sent from the server. Alternatively, if the user device does not have sufficient processing and/or memory resources for rendering the scene asset locally, the second scene asset data may be sent from the server. The bandwidth resources available to the user device may affect the ability of the user device to receive an encoded video stream representing a rendering of the scene asset generated by the server (or the ability of the user device to receive such an encoded video stream without exceeding a predetermined latency threshold, for example). Accordingly, if the bandwidth resources available to the user device are relatively high, the second scene asset data (representing the rendering of the scene asset generated by the server) may be sent by the server. On the other hand, if the bandwidth resources available to the user device are relatively low, the first scene asset data may be sent by the server instead, since the first scene asset data typically comprises less data than the second scene asset data. One or more of the processing resources and memory resources of the user device and the bandwidth resources available to the user device may be taken into account when selecting between the first scene asset data and the second scene asset data. This may take the form of a trade-off between the local computing resources of the user device and the available network bandwidth, for example.

Therefore, an adaptive approach is provided that dynamically assigns the task of rendering a given scene asset to either the user device or the server, according to compute and/or bandwidth budgets and/or targets. This reduces bandwidth requirements compared to a case in which all of the scene content is rendered on the server and then sent as an encoded video stream to the user device. This also results in an improved user experience by decreasing latency. For example, since the user device can render one or more assets (e.g. characters in a scene) whilst simultaneously decoding received video (representing the scene background as rendered by the server, for example), and then superimpose the rendered characters onto the decoded video, latency may be reduced, compared to a case in which all of the scene content is rendered on the server, sent as an encoded video stream to the user device, and subsequently decoded by the user device. Moreover, some user devices (or types of user device) may be equipped with relatively powerful computing resources (e.g. hardware such as a graphics processing unit, GPU, and/or a neural processing unit, NPU) and/or a relatively large amount of memory. Such devices may therefore be capable of rendering at least some of the scene assets in a given scene, and the presently-disclosed methods cater for such devices, as well as devices having more limited processing and/or memory resources. The presently-disclosed methods may thus be applied flexibly across a wide variety of user devices, allowing for trade-offs between user device rendering time on the one hand, and the required bitrate for streaming visually-lossless video from the server on the other hand. This dynamic approach may be performed in substantially real time, making assignment decisions (as to where the rendering should occur) based on current processing, memory and/or bandwidth resources of the user device, which may change over time.

A 'scene asset' described herein refers to a 2D or 3D model representing a particular character, object, background element, or a combination of such. The scene may include a number of scene assets. For example, a given scene may include five characters (e.g. a human characters) interacting in or before a particular background. Each of the characters and the background may correspond to a different scene asset. The received data representing the scene may indicate which scene assets are in the scene, as well as their respective positions, movement, orientations, lighting, texture, etc. Additionally or alternatively, the received data may indicate the position and/or movement of a camera (which may be a virtual or a real camera). The position and/or movement of the camera corresponds to the point-of-view of the scene, and may affect the positions, orientations, movements, etc., of the different scene assets in the scene.

As mentioned above, the first scene asset data is useable by the user device to render the scene asset. In particular, the first scene asset data indicates how the scene asset should be rendered in the scene. This is in contrast with the second scene asset data, which represents a rendering of the scene asset generated by the server. In embodiments, the first scene asset data is indicative of a configuration of the scene asset in the scene. The configuration may comprise one or more of: orientation, position, movement, appearance, perspective, lighting and/or viewpoint of the scene asset. The scene asset may have different configurations in different scenes (or parts of scenes) depicting the scene asset. As such, how the scene asset is to be rendered in the particular scene (or the particular part of the scene) may be indicated by the first scene asset data, thereby enabling the user device to render the scene asset.

In embodiments, the first scene asset data is indicative of animation control weights for the scene asset. The animation control weights indicated by the first scene asset data allow the user device to render the scene asset. In particular, the animation control weights are indicative of the position and/or movement of the scene asset in the scene. For example, a 3D scene asset may be represented by a mesh with corresponding texture maps. The mesh may comprise a set of vertices and corresponding edges connecting the vertices. Animation control weights may be applied to the vertices of the mesh to control the movement, position and/or orientation of the scene asset in a given image.

In embodiments, the first scene asset data comprises a compacted set of animation control weights. Sending a compacted set of animation control weights may require less bandwidth than sending a rendering of the scene asset generated by the server. The compaction may be based on principal component analysis, PCA. PCA is a linear dimensionality reduction technique which allows for compaction without impacting the perceptual quality of subsequently rendered images at the user device, and provides for inherent rate/accuracy scalability, i.e. an increase in quality with an increased number of retained dimensions. The compaction may be based on other techniques in alternative embodiments.

In embodiments, the scene asset comprises a rigged three-dimensional model of an object. The object may be an animate object (such as a human or animal character) or an inanimate object. In some such embodiments, the first scene asset data is indicative of a set of rig control weights for controlling a movement and/or position of the rigged three-dimensional model. Rigging allows the animation to be linked to physical constraints, thereby reducing dimensionality. Rigging involves the creation of a virtual skeleton for the 3D model, where the geometry of the model may be bound to a hierarchical structure of bones or joints. Such a skeleton system enables a wide range of complex movements to be animated by manipulating the skeleton using the control weights, which in turn deforms the geometry of the model.

In embodiments, the first scene asset data is indicative of a set of blendshape control weights. This allows the user device to render the scene asset by authentically animating faces. In particular, blendshapes may be used in facial animation in order to portray a wide array of expressions. A linear basis of designated blendshape targets may be used, in which each target represents a set of vectorized vertex coordinates corresponding to a particular expression (e.g. frowning, smiling, etc.). Control weights may then be used to approximate any facial expression accordingly, e.g. based on weighted combinations of the different blendshapes. The first scene asset data may be indicative of both blendshape control weights and rig control weights in some embodiments.

In embodiments, the second scene asset data comprises encoded image data obtained by encoding the rendering of the scene asset generated by the server. The encoded image data represents an image depicting the rendered scene asset. The encoding may be performed in accordance with any suitable image or video coding standard.

In embodiments, the determining comprises receiving, from the user device, selection data indicating the selected one of the first scene asset data and the second scene asset data. As such, the user device may inform the server of which of the first scene asset data and the second scene asset data has been selected. That is, the user device may perform the selection, and notify the server accordingly. For example, the user device may perform the selection by comparing its current computing resources with the computing resources that would be required to render the scene asset locally, as will be discussed in more detail below. In alternative embodiments, the server may determine the selected one of the first scene asset data and the second scene asset data without input from the user device. That is, the server itself may perform the selection in some cases. Accordingly, determining the selected one of the first scene asset data and the second scene asset data may comprise performing the selection, or instead may comprise being informed of a result of the selection. Such a selection may be based on determined or estimated computing resources of the user device. Additionally or alternatively, the selection may be based on determined or estimated computing resources required to render the scene asset, and/or determined or estimated network resources required to transmit an encoded video stream to the user device.

In embodiments, the method comprises transmitting, to the user device, a manifest file comprising an indication of the first scene asset data and/or the second scene asset data. The first scene asset data or the second scene asset data is selected using the manifest file. The manifest file allows the user device to select either the first scene asset data or the second scene asset data for the scene asset. The use of a manifest file also facilitates efficient processing in examples where the server communicates with a number of different user devices, since the same manifest file can be distributed to each user device.

In embodiments, the manifest file comprises an indication of one or more resources required for rendering the scene asset at the user device using the first scene asset data and/or an indication of one or more resources required for receiving, from the server, the second scene asset data. In embodiments, the one or more resources required for rendering the scene asset using the first scene asset data and/or the one or more resources required for receiving the second scene asset data comprise one or more of: processing resources, memory resources and/or bandwidth resources. As such, the manifest file may indicate the computing cost for rendering the scene asset on the user device and/or the bandwidth cost for transmitting to the user device a rendering of the scene asset generated by the server. A decision as to whether to send to the user device the first scene asset data or the second scene asset data may be based on a trade-off between these factors.

In embodiments, the manifest file comprises an indication of one or more resources required for receiving, from the server, the first scene asset data. For example, the manifest file may comprise an indication of bandwidth resources required for receiving the first scene asset data. As mentioned above, the first scene asset data typically comprises less data than the second scene asset data. Consequently, the bandwidth cost for transmitting the first scene asset data will be lower than for transmitting the second scene asset data. However, in some cases the second scene asset data may comprise less data than the first scene asset data (for example if the scene asset is obscured behind another object in the scene). Accordingly, by providing the user device with an indication of resources required for receiving the first scene asset data, the user device is able to make a more well-informed decision as to whether to request the first scene asset data or the second scene asset data.

In alternative embodiments, for example where the server itself performs the selection, the server does not send a manifest file to the user device.

In embodiments, the scene asset is a first scene asset, and the scene further comprises a second scene asset to be rendered. In some such embodiments, if the server transmits the first scene asset data to the user device, the method comprises transmitting, to the user device, data representing a rendering of the second scene asset generated by the server. Similarly, if the server transmits the second scene asset data to the user device, the method comprises transmitting, to the user device, data useable by the user device to render the second scene asset. As such, one of the scene assets for a given scene is rendered by the user device and another of the scene assets for the given scene is rendered by the server. This is in contrast with known systems in which all of the scene assets of a given scene (i.e. all of the scene content) are rendered on the server or all of the scene assets of a given scene are rendered on the user device. Instead, the scene assets of a given scene are distributed between the server and the user device, such that the server renders one or more of the scene assets and the user device renders one or more others of the scene assets. It will be understood that this is not the same as distributing different parts of the rendering pipeline for a given scene asset (or group of scene assets) between the server and the user device. Instead, the server performs the entirety of the rendering pipeline for one scene asset, and the user device performs the entirety of the rendering pipeline for another scene asset. In other words, rather than partitioning the rendering pipeline globally, distributing some tasks to the user device (e.g. direct lighting) and other tasks to the server (e.g. global illumination), the presently-described methods involve distributing the scene assets themselves between the user device and the server, such that each side performs the full rendering pipeline but only for a subset of assets. Moreover, the presently-described methods allow for a dynamic allocation of compute efforts on both the server and the user device in real-time based on available compute and/or bandwidth budgets and/or targets.

In alternative embodiments, the user device renders all of the scene assets of a given scene, or the server renders all of the scene assets of a given scene. However, even in such cases, a decision is still made as to whether the server or the user device is to render each scene asset, the decision being based on a resource characteristic of the user device.

In embodiments, the selection is performed using a water-filling algorithm. In embodiments, the selection is performed on the basis of a position of the scene asset in the scene. Preferably, scene assets that are relatively close to the camera in the scene are rendered by the user device, whereas scene assets that are relatively far from the camera are rendered by the server. This reduces the likelihood of occlusion effects having to be handled by the user device, since rendered foreground assets can be superimposed on top of a rendered background. The selection may involve sorting the scene assets according to their distance from the camera, beginning with the closest scene asset. The water-filling algorithm then considers the scene assets in their sorted order, such that the scene asset closest to the camera is considered first. If it is determined that the user device has sufficient resources to render the scene asset, the first scene asset data is requested for that scene asset, and the next closest scene asset is then considered, and so on, until it is determined that the user device does not have sufficient resources to render further scene assets. It will be understood that other algorithms and/or methods may be used to perform the selection in alternative embodiments.

In embodiments, the method comprises determining, based on a perceptual quality score, a dimensionality of the first scene asset data. In particular, the dimensionality of the first scene asset data may be minimised (thereby minimising the bitrate for sending the first scene asset data) subject to the perceptual quality score of the rendered scene asset generated using the first scene asset data staying above a predetermined threshold. An example of such a perceptual quality score is video multi-method assessment fusion, VMAF. Other perceptual quality scores may be used in alternative embodiments.

In embodiments, the scene comprises a video game scene. In some such embodiments, the data representing the scene is received from a video game engine running on the server. The video game engine is a software framework for implementing a video game. In particular, the video game engine may control and/or enforce the logic of the video game. The video game engine may receive feedback from the user device, e.g. based on user input at the user device, which causes changes in the scene to be depicted. The video game engine may be operable to determine and/or control which scene assets are to be depicted in a given scene, and/or the positions of such scene assets in the scene. In alternative embodiments, the scene does not comprise a video game scene. For example, the scene may comprise a VR scene that is not associated with a video game.

In embodiments, the method comprises generating, at the server, a rendering of a background of the scene, and transmitting, to the user device, data representing the rendering of the background of the scene by the server. As such, the background is preferably rendered by the server instead of by the user device. The background may be considered as a scene asset of the scene. The background may be more complicated and/or require more resources to render than foreground assets, and therefore the server may be better able to handle rendering the background than the user device. In alternative embodiments, the user device renders the background.

In embodiments, the method comprises generating an image mask corresponding to the scene asset, and excluding the image mask from the rendering of the background of the scene. This reduces the amount of data to be transmitted to the user device compared to a case in which such an image mask is not excluded from the rendering of the background. Additionally, this reduces the amount of processing performed by the server, since the server is not required to render the full content of the background. In particular, if the user device is to render the scene asset, the image mask corresponds to an area in the image which will be overwritten by the rendering generated by the user device. As such, the server does not need to render the full content of the background. The image mask represents the pixels that the user device will update. Excluding the image mask from the rendering of the background may comprise setting those pixel values of the area corresponding to the image mask to zero or to another predetermined value.

The methods of generating images described herein may be performed on a batch of video data, e.g. a complete video file for a movie or the like, or on a stream of video data.

In embodiments, the method comprises generating, prior to determining the selected one of the first scene asset data and the second scene asset data, the first scene asset data and/or the second scene asset data. In embodiments, the method comprises generating both the first scene asset data and the second scene asset data prior to determining the selected one of the first scene asset data and the second scene asset data to transmit to the user device. For example, the server may produce animation control weights useable by the user device to render the scene asset and may also generate a rendering of the scene asset, prior to a decision being made as to which of these two data is to be sent to the user device. Both the first and the second scene asset data may thus be available for transmission from the server to the user device. This may improve efficiency, particularly in systems where the server is operable to communicate with a (potentially large) number of user devices, each producing their own rendered images of the scene. In alternative embodiments, the server generates the first scene asset data and/or the second scene asset data in response to determining the selected one of the first scene asset data and the second scene asset data to transmit to the user device. For example, the server may determine that the second scene asset data is to be sent to the user device, and may generate, accordingly, a rendering of the scene asset 'on-the-fly', for transmission to the user device.

In accordance with another aspect of the present disclosure, there is provided a computer-implemented method for generating a rendered image of a scene, the scene comprising one or more scene assets, the method comprising, at a user device operable to communicate with a server:

  receiving, from the server, data for a scene asset of the scene, the data comprising a selected one of first scene asset data and second scene asset data, the first scene asset data being useable by the user device to render the scene asset, the second scene asset data representing a rendering of the scene asset generated by the server, wherein the selection is performed on the basis of a resource characteristic of the user device;
  determining, based on the received data, to process the received data according to a first processing mode of the user device or a second processing mode of the user device, the first processing mode comprising rendering the scene asset using the first scene asset data, the second processing mode comprising obtaining, using the second scene asset data, the rendering of the scene asset generated by the server; and
  processing the received data according to the determined processing mode to generate a rendered image of the scene.

In embodiments, the method comprises, prior to receiving the data for the scene asset, determining, at the user device, the selected one of the first scene asset data and the second scene asset data to be transmitted to the user device. As such, the user device may select which of the first scene asset data and the second scene asset data should be transmitted from the server to the user device. The user device may perform the selection based on the currently available computing and/or network resources of the user device. Such computing and/or network resources may be time-varying, e.g. dependant on which other processes are currently being performed (or are expected to be performed in the future) by the user device 120, the status of one or more buffers, memory and/or processors of the user device 120, the currently available network bandwidth, etc. In alternative embodiments, it is the server that selects which of the first scene asset data and the second scene asset data is to be transmitted.

In embodiments, the method comprises transmitting, to the server, selection data indicating the selected one of the first scene asset data and the second scene asset data. This allows the server to send the selected one of the first scene asset data and the second scene asset data to the user device.

In embodiments, the resource characteristic of the user device comprises one or more of: processing resources of the user device, memory resources of the user device, and bandwidth resources available to the user device.

In embodiments, the method comprises receiving, from the server, a manifest file comprising an indication of the first scene asset data and/or an indication of the second scene asset data. The first scene asset data or the second scene asset data is selected using the manifest file.

In embodiments, the manifest file comprises an indication of one or more resources required for rendering the scene asset at the user device using the first scene asset data and/or an indication of one or more resources required for receiving, from the server, the second scene asset data. In embodiments, the manifest file comprises an indication of processing and/or memory resources required for rendering the scene asset at the user device using the first scene asset data and/or an indication of bandwidth resources required for receiving, from the server, the second scene asset data. In embodiments, the manifest file comprises an indication of one or more resources required for receiving, from the server, the first scene asset data. For example, the manifest file may comprise an indication of bandwidth resources required for receiving the first scene asset data.

In embodiments, the selection is based on a comparison between the processing and/or memory resources required for rendering the scene asset indicated in the manifest file and processing and/or memory resources of the user device. For example, if it is determined that the user device has sufficient processing and/or memory resources to render the scene asset, the first scene asset data may be selected. Otherwise, the second scene asset data may be selected. Additionally or alternatively, the selection is based on a comparison between the bandwidth resources required for receiving the second scene asset data indicated in the manifest file and bandwidth resources available to the user device. For example, if it is determined that sufficient bandwidth is available to receive the second scene asset data, the second scene asset data may be selected. Otherwise, the first scene asset data may be selected. In some cases, the selection is based on both (i) a comparison between the processing and/or memory resources required for rendering the scene asset indicated in the manifest file and processing and/or memory resources of the user device, and (ii) a comparison between the bandwidth resources required for receiving the second scene asset data indicated in the manifest file and bandwidth resources available to the user device. The selection may be based on a trade-off between the processing and/or memory resources of the user device on the one hand and the bandwidth resources available to the user device (e.g. the bandwidth of a wireless network used by the user device) on the other hand.

In embodiments, the scene asset is a first scene asset, and the scene further comprises a second scene asset to be rendered. In some such embodiments, if the user device receives the first scene asset data, the method comprises receiving, from the server, data representing a rendering of the second scene asset generated by the server. Similarly, if the user device receives the second scene asset data, the method comprises receiving, from the server, data useable by the user device to render the second scene asset. Accordingly, one or more scene assets in the scene are rendered by the user device and one or more other scene assets in the scene are rendered by the server.

In embodiments, the method comprises receiving, in an initial or offline stage, the scene asset, and storing the scene asset in storage of the user device. The scene asset may be delivered to the user device as part of the user device software, a software update, or streamed asynchronously, for example. In embodiments, principal components of the scene asset are received in the initial or offline stage. Subsequently, in an online stage, animation control weights for controlling the principal components of the scene asset may be received (as first scene asset data), thereby allowing the user device to render the scene asset. Thus, the user device is not required to receive the scene asset (or principal components of the scene asset) every time the user device is to render the scene asset. Instead, the user device may receive a set of compact control weights which may be applied to the locally-stored principal components, thereby improving efficiency and reducing the bandwidth required to receive the first scene asset data.

In embodiments, the second processing mode comprises decoding the received data to obtain the rendering of the scene asset generated by the server. That is, the received data may comprise an encoded representation of the rendering of the scene asset generated by the server, and the second processing mode may comprise decoding the encoded representation.

In accordance with another aspect of the disclosure there is provided a computer-implemented method for generating a rendered image of a scene, the scene comprising one or more scene assets, the method comprising:

at a user device operable to communicate with a server:

receiving, from the server, a manifest file of the scene, the scene including a scene asset to be rendered, the manifest file indicating first scene asset data and/or second scene asset data, the first scene asset data being useable by the user device to render the scene asset, the second scene asset data representing a rendering of the scene asset generated by the server; and

transmitting, to the server, selection data indicating a selected one of the first scene asset data and the second scene asset data, wherein the selection is performed on the basis of a resource characteristic of the user device;

at the server:

receiving the selection data from the user device; and

transmitting, to the user device, data for the scene asset, the data for the scene asset comprising the selected one of the first scene asset data and the second scene asset data; and

at the user device:

receiving, from the server, the data for the scene asset; and

processing the data for the scene asset to generate a rendered image of the scene.

In accordance with another aspect of the disclosure there is provided a computing system comprising:

one or more processors; and

memory;

wherein the computing system is arranged to perform, using the one or more processors, any of the methods described above. The computing system may comprise a server, a user device, or both a server and a user device.

In accordance with another aspect of the disclosure there is provided a computer program product arranged, when executed on a computing system comprising one or more processors and memory, to cause the computing system to perform, using the one or more processors, any of the methods described above.

In accordance with another aspect of the disclosure there is provided a server operable to communicate with a user device, the server being configured to:

receive data representing a scene, the scene including a scene asset to be rendered;
determine a selected one of first scene asset data and second scene asset data to transmit to the user device, the first scene asset data being useable by the user device to render the scene asset, the second scene asset data representing a rendering of the scene asset generated by the server, wherein the selection is performed on the basis of a resource characteristic of the user device; and
transmit, to the user device, the selected one of the first scene asset data and the second scene asset data, to enable the user device to generate a rendered image of the scene.

In accordance with another aspect of the disclosure there is provided a user device operable to communicate with a server, the user device being configured to:

receive, from the server, data for a scene asset of the scene, the data comprising a selected one of first scene asset data and second scene asset data, the first scene asset data being useable by the user device to render the scene asset, the second scene asset data representing a rendering of the scene asset generated by the server, wherein the selection is performed on the basis of a resource characteristic of the user device;
determine, based on the received data, to process the received data according to a first processing mode of the user device or a second processing mode of the user device, the first processing mode comprising rendering the scene asset using the first scene asset data, the second processing mode comprising obtaining, using the second scene asset data, the rendering of the scene asset generated by the server; and
process the received data according to the determined processing mode to generate a rendered image of the scene.

In accordance with another aspect of the disclosure there is provided a system comprising a server and a user device operable to communicate with the server,

wherein the user device is configured to:

receive, from the server, a manifest file of the scene, the scene including a scene asset to be rendered, the manifest file indicating first scene asset data and/or second scene asset data, the first scene asset data being useable by the user device to render the scene asset, the second scene asset data representing a rendering of the scene asset generated by the server; and
transmit, to the server, selection data indicating a selected one of the first scene asset data and the second scene asset data, wherein the selection is performed on the basis of a resource characteristic of the user device;

wherein the server is configured to:

receive the selection data from the user device; and
transmit, to the user device, data for the scene asset, the data for the scene asset comprising the selected one of the first scene asset data and the second scene asset data; and

wherein the user device is configured to:

receive, from the server, the data for the scene asset; and
process the data for the scene asset to generate a rendered image of the scene.

It will of course be appreciated that features described in relation to one aspect of the present disclosure described above may be incorporated into other aspects of the present disclosure.

Description of the Drawings

Embodiments of the present disclosure will now be described by way of example only with reference to the accompanying schematic drawings of which:

Figure 1 is a schematic diagram showing an example of a system in accordance with embodiments;
Figure 2 is a schematic workflow diagram showing an example image rendering framework in accordance with embodiments;
Figure 3 is a graph showing dimensionality of PCA vs VMAF in accordance with embodiments;
Figure 4 shows an example water-filling algorithm ('Algorithm 1') in accordance with embodiments;
Figure 5 is a graph showing dimensionality of PCA vs VMAF in accordance with embodiments;
Figure 6 is a graph showing bitrate vs normalized client compute times in accordance with embodiments;
Figure 7 is a flowchart showing the steps of a method for generating a rendered image in accordance with embodiments;
Figure 8 is a flowchart showing the steps of a method for generating a rendered image in accordance with embodiments;
Figure 9 is a flowchart showing the steps of a method for generating a rendered image in accordance with embodiments; and
Figure 10 is a schematic diagram of a computing device in accordance with embodiments.

Detailed Description

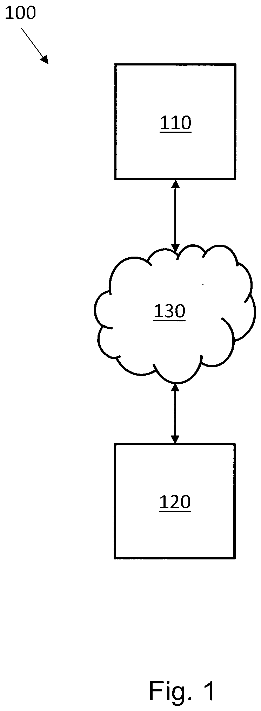

Figure 1 is a schematic diagram showing a system 100 according to embodiments. The system 100, and/or components thereof, may be used to implement the methods described herein.

The system 100 comprises a server 110 and a user device 120. The server 110 and the user device 120 are operable to communicate with one another via a communications network 130, which may comprise one or more different communication networks. The communications network 130 may, for example, comprise a wireless communications network, such as a wireless local area network (WLAN), and one or more other networks, such as the Internet. The WLAN may be a Wi-Fi network. In alternative embodiments, the server 110 and the user device 120 are operable to communicate without the use of the communications network 130. For example, the server 110 and the user device 120 may be operable to communicate with one another via one or more cables and/or wires. As such, the communications network 130 may be omitted in some embodiments.

As will be discussed herein, some of the presently-disclosed methods may be performed using the server 110, others of the presently-disclosed methods may be performed using the user device 120, and still others of the presently-disclosed methods may be performed using a combination of the server 110 and the user device 120. Accordingly, one of the server 110 and the user device 120 may be omitted in some embodiments.

The server 110 is operable to send and/or receive data via the communications network 130. In particular, the server 110 is operable to transmit data to the user device 120 to enable the user device 120 to generate a rendered image of a scene. Additionally, the server 110 may be operable to receive data from the user device 120. In embodiments, the server 110 implements a video game engine (not shown). The video game engine may be used to facilitate asset creation and/or asset placement in video game scenes. The server 110 also implements a renderer (not shown). The renderer may be part of, or separate from, the video game engine. The renderer may be used to render scene assets. The scene assets may be rendered based on input from the video game engine. The server 110 may also implement an encoder (not shown) for generating an encoded bitstream from rendered scene assets. The encoded bitstream may be transmitted to the user device 120.

Although a single server 110 is shown in Figure 1, it will be understood that in alternative embodiments the system 100 comprises one or more further servers which are operable to communicate with the server 110 and/or with the user device 120. At least some of the processes that are described herein as being performed by the server 110 may be distributed amongst multiple servers in some embodiments.

The user device 120 may be referred to as a 'client device' (since it acts as a client to the server 110). The user device 120 may alternatively be referred to as a 'display device' or 'displaying device', since the user device 120 is operable to produce images for display to a user. Such images may be displayed on the user device 120 itself, or on a separate device such as a monitor. The user device 120 may alternatively be referred to as a 'personal device' of a user. The user device 120 may comprise a mobile phone, personal computer, video games console, VR headset, tablet computer, etc. The user device 120 is operable to send and/or receive data via the communications network 130. In particular, the user device 120 is operable to receive data from the server 110 to enable the user device 120 to generate a rendered image of a scene. Additionally, the user device 120 may be operable to transmit data to the server 110.

The user device 120 is operable to generate rendered images based on data received from the server 110. In embodiments, the user device 120 implements a renderer (not shown). That is, both the server 110 and the user device 120 may each implement a respective renderer capable of rendering scene assets.

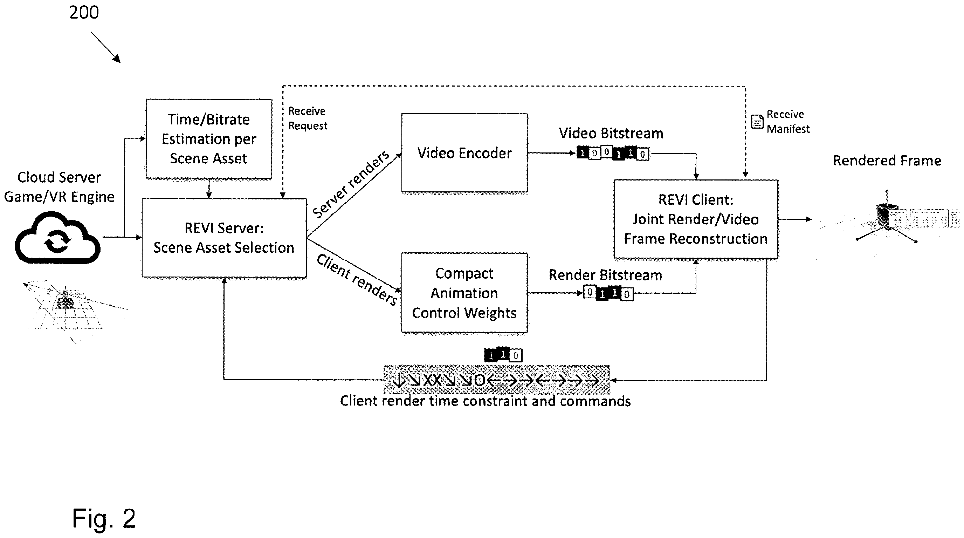

Figure 2 shows schematically an example of an image rendering framework 200 according to embodiments. The framework 200 shown in Figure 2 may be implemented by the system 100 described above with reference to Figure 1. The framework 200 may be considered a hybrid encoding method, since it allows for different types of scene asset data to be sent from the server 110 to the user device 120 (e.g. either animation control weights to allow the user device 120 to render a scene asset, or a rendering of the scene asset generated by the server 110). The framework 200 may also be referred to as an adaptive render-video (REVI) streaming framework. In the framework 200 shown in Figure 2, the server 110 runs a game or VR engine including both the game logic and a renderer. The server 110 also includes REVI server logic, which provides a manifest describing options for scene assets to be either included in a video stream (sent from the server 110 to the user device 120) or to be sent in the form of compact animation control weights to the user device 120. That is, the server 110 can deliver each scene component to the user device 120 either as compact animation control weights (which is an example of 'first scene asset data') or as video (which is an example of 'second scene asset data'). The user device 120 also runs a renderer, but it does not run the game logic in the embodiments shown in Figure 2. Instead, the user device 120 includes REVI client logic, which is remote-controlled by the server 110 via the streamed animation control weights. The REVI client can subscribe to the manifest of the REVI server and, per game scene, request different scene asset data for the assets in the scene.

Various components of the framework 200 shown in Figure 2 will now be described.

As mentioned above, the server 110 may send to the user device 120 compact animation control weights to allow the user device 120 to render a given scene asset locally. A widely used representation for 3D assets in computer games and animations is a mesh with corresponding texture maps. Such a mesh may be formalized as a set of $v$ vertices $V = \{(xi, yi, zi) \in R^3 \mid i = 1, ..., v\}$ and a corresponding topology defining the edges connecting the vertices. The background of the scene may also be considered as an asset with the largest distance from the camera (e.g., a background can be simulated as a large textured box encompassing the visible area). It should be noted that not all 3D assets used in gaming and animation are meshes. For instance, particle-based systems are sometimes used for modelling transient or dynamically changing assets (e.g., fire, water, explosions, etc.). Neural network based assets such as Neural Radiance Fields may be used as alternative representations. Although the presently-described embodiments focus on mesh-based assets, these alternative assets can also be controlled by a set of parameters (e.g., defining the position of each particle) and hence the presently-described methods can also be applied to these (non-mesh-based) cases.

Two techniques used in animating mesh-based assets are blendshapes and rigging. Blendshapes may be employed in facial animation in order to portray a wide array of authentic expressions. To this end, a linear basis of designated blendshape targets is used, wherein each target represents a set of vectorized vertex coordinates corresponding to a key expression (e.g., frowning and smiling). If the basis is sufficiently large, any facial expression can be approximated via an adequate choice of blendshape weights. Let f E $R^{3v}$ be a target expression with $v$ degrees of freedom in each of the three dimensions. The target expression can be formulated as a linear combination of blendshapes,

$$f = \sum_{k=0}^{n-1} b_k \, w_k$$

, where $b_k \in R^{3v}$ is the k-th blendshape, $w_k$ E R is the corresponding blendshape weight and n is the number of blendshape vectors. To link the animation to physical constraints (and thereby reduce dimensionality), rigging involves the creation of a virtual skeleton for the 3D model, wherein the model's geometry is bound to a hierarchical structure of bones or joints. This skeletal system, underpinned by the application of transformation matrices, enables an animator to produce a wide spectrum of complex movements by manipulating the skeleton, which in turn deforms the model's geometry. For instance, in a body control rig, each class of bones (lower leg, upper leg, torso, etc.) connected with major joints is controlled by rig control weights (also referred to as 'parameters'). The bones are related to the mesh vertices representing the skin via another set of weights that describe the influence each bone has on each vertex. Similarly to blendshapes, a rig is used to animate an asset using a set of control weights. For notational simplicity, the blendshape or rig control weights may be collected in a vector $w \in \mathbb{R}^n$, where n = 3$v$ in the case of blendshapes and n < $v$ in a control rig. As such, each 3D asset has its own (blendshape/rig control) weight vectors, and the value of n comes from the asset and its animation control mechanism.

To animate an asset on the user device 120, the blendshapes or control rig architecture needs to be transferred only once but w may be streamed in every frame. This incurs an ongoing bitrate cost, which can be minimized for efficient delivery. To this end, principal components analysis (PCA) is utilized. PCA exploits the correlation between features, in order to find the linear subspace of a given dimension d < n that preserves the maximum variance in the data. For each asset, given the covariance matrix $\Sigma \in \mathbb{R}^{n \times n}$ of the weights, the eigenvalue decomposition, $\Sigma = E\Lambda E^T$, yields the principal components as eigenvectors in the columns of matrix E. The tradeoff between bitrate and fidelity can be controlled by retaining only the d eigenvectors corresponding to the largest eigenvalues in $\Lambda$. Non-linear methods such as neural-network based autoencoders may perform better compaction for the same fidelity, but they are computationally more complex to train, and cannot allow for multiple embeddings, i.e., a new autoencoder may need to be trained for each value of *d*.

Perceptually-optimized blendshape/rig control weights can therefore be derived by solving the following constrained rate optimization problem (Equation 1):

$$\text{minimize} \quad d$$

$$\text{subject to} \quad VMAF(render(f)) \geq q$$

where minimizing d corresponds to minimizing the bitrate, VMAF (video multi-method assessment fusion) is a perceptually-tuned quality score for the rendered asset f, and q is a perceptual quality threshold (typically q = 95) in order to allow for visually-lossless representation according to VMAF. This optimization may be performed on a separate dataset to avoid overfitting. While this cannot guarantee visual lossless rendering for arbitrary test data, uncertainty can be mitigated by estimating the variance of VMAF in the validation data and selecting a confidence interval that is entirely above the threshold value.

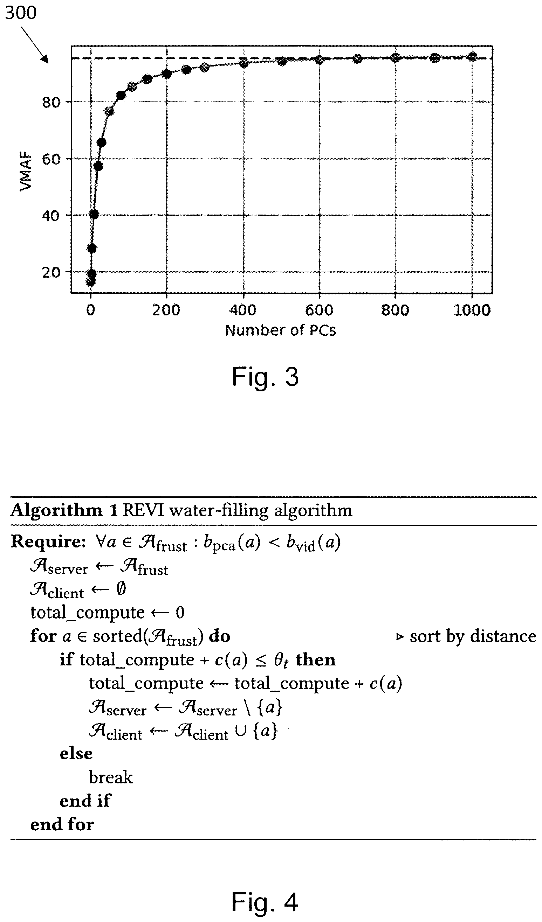

To solve this optimization problem, a logarithmic search for d is used. Unlike autoencoders, different values of d are explored without recalculating the PCA, since the PCA has inherent rate-quality embedding. Therefore, only VMAF needs to be recomputed for each search point. In practice, the search starts at a candidate value for d that corresponds to half the full dimensionality and VMAF is computed for this point. This splits the admissible range of candidate values for principal components (PCs) into half the original range. The search continues until the optimal value of d is identified at a cost of $\mathcal{O}$ (log *n*). Figure 3 shows the rate-perceptual quality tradeoff for an example asset. In particular, Figure 3 shows a graph 300 of the dimensionality d of the PCA plotted against VMAF for an example asset with n=21918 vertex coordinates. The dashed line in Figure 3 indicates the VMAF=95 threshold which is obtained for about *d*=600 PCs, which corresponds to a compression factor of 36x.

The framework shown in Figure 2 involves accurately controlling the transmission bitrate and compute time required for rendered scene assets on the user device 120. Two scenarios may be considered. In a first scenario, the user device 120 compute time is bounded and the bitrate is minimized. In a second scenario, the bitrate is limited and the user device 120 compute time is minimized. In both scenarios, for each scene asset, there is a choice between two options: (i) rendering the scene asset on the server 110 and streaming it as a video (along with other rendered scene assets); or (ii) streaming the scene asset's PCA-compressed control weights and rendering the scene asset on the user device 120.

To formalize this problem, let $\mathcal{A}$ be the space of all assets and $\mathcal{A}_{frust,t} \subset \mathcal{A}$ the assets contained in the view frustrum at time step $t \in \mathbb{N}$. The subscript t is occasionally omitted for notational brevity. The space is assumed to include information about the asset, its location, rotation, as well as camera parameters. Since these features can change over time, each asset is time dependent and will be denoted as $a_t \in \mathcal{A}$. The goal is to partition $\mathcal{A}_{frust}$ into assets rendered on the server 110 $\mathcal{A}_{server}$ and assets rendered on the client device 120 $\mathcal{A}_{client}$ (after the client device 120 receives the control weights from the server 110). As such, $\mathcal{A}_{server} \cup \mathcal{A}_{client} = \mathcal{A}_{frust}$ and $\mathcal{A}_{server} \cap \mathcal{A}_{client} = \varnothing$. Let $b_{vid} : \mathcal{A} \to \mathbb{R}$ be a function that returns the estimated future bitrate for a given asset if it were rendered alone on a neutral background and streamed as a video. More concretely, $b_{vid} (a_t) = $ bitrate($a_{t+1}, a_{t+2},..., a_{t+N} | a_t, a_{t-1},..., a_{t-M+1}$), that is, the future bitrate for asset *a* for the next *N* frames when conditioned on the past M frames. Analogously, $b_{pca} : \mathcal{A} \to \mathbb{R}$ may be defined as the function that returns the bitrate for an asset if its PCA-compressed control weights are streamed to the client device 120. Let $c : \mathcal{A} \to \mathbb{R}$ be the function that returns the compute time it takes to render the asset on the client device 120 after receiving the control weights. The main objective function is then formalized as the following (Equation 2):

$$\text{minimize} \quad b_{vid}\left(\mathcal{A}_{server,t}\right) + b_{pca}\left(\mathcal{A}_{client,t}\right)$$

$$\text{subject to} \quad c\left(\mathcal{A}_{client,t}\right) \leq \Theta_t$$

where $b_{vid}(\mathcal{A}_{server,t})$ is shorthand notation for $\sum_{a_t \in \mathcal{A}_{server,t}} b_{vid}(a_t)$ , and analogously for $b_{pca}$ and $c$. In other words, the aim is to minimize the total bitrate consisting of the video bitrate incurred by assets rendered on the server 110 plus the PCA-compressed bitrate for streaming assets to the client device 120, subject to the constraint that the client device 120 has a limited and potentially time-varying computation budget amounting to $\theta_t$.

The constrained minimization of Equation 2 involves a discrete, combinatorial optimization problem. It involves partitioning the set $\mathcal{A}_{frust}$ into two subsets $\mathcal{A}_{server}$ and $\mathcal{A}_{client}$. The optimization search space is finite but with $2^{|\mathcal{A}_{frust}|}$ possible partitions it grows exponentially with the number of assets. However, the search space can be significantly reduced by taking into account the fact that, since the assets rendered on the client device 120 will be superimposed on top of a pre-rendered video streamed from the server 110, they should be in the foreground. For instance, if $\mathcal{A}_{client}$ contains 5 assets, it is preferable that these are the 5 assets closest to the view camera, otherwise occlusion effects would be more likely to have to be considered. This reduces the search space to $|\mathcal{A}_{frust}|$, the number of assets in the view frustrum. Consequently, the number of partitions only grows linearly with the number of assets.

A water-filling algorithm is used to solve the optimization problem in Equation 2. An example of such a water filling algorithm (Algorithm 1) is shown in Figure 4. Algorithm 1 first sorts the assets according to their distance from the camera, beginning with the closest asset. If the expected compute time of the first asset does not exceed threshold $\theta_t$, it is added to $\mathcal{A}_{client}$ and removed from $\mathcal{A}_{server}$. The algorithm proceeds in the same fashion with the next closest asset until the total client compute time exceeds the threshold, at which time the algorithm terminates. A requirement in Algorithm 1 is that the total bitrate decreases monotonically as assets get removed from $\mathcal{A}_{server}$, i.e., $b_{pca}(a) < b_{vid}(a)$. In other words, the optimality of Algorithm 1 requires that $\forall a \in \mathcal{A}_f : b_{pca}(a) < b_{vid}(a)$, i.e., streaming an asset as control weights should incur a lower bitrate cost than streaming an asset as video. If the requirement is met, the optimality of the solution is guaranteed. However, there may be scenarios, e.g. involving distant assets and occlusion, wherein this requirement can be violated, e.g. such that the PCA-bitrate exceeds the video bitrate. Two such scenarios, and their mitigation, will now be described.

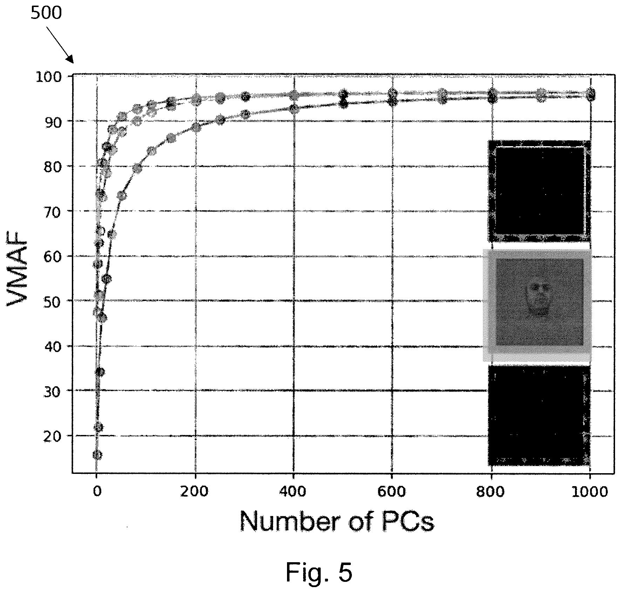

In a first scenario, the asset is far away from the camera and contributes a relatively small number of pixels to the server-rendered video. In this case, encoding as a video can be cheaper than naively sending control weights. However, the scalability of PCA provides a solution. Unlike autoencoders, which are trained on a specific dimensionality, PCA allows for on-the-fly tradeoffs between bitrate and perceptual quality. For instance, starting from a given number d of PCs used, bitrate can be reduced at the expense of perceptual quality by decreasing $d$. This is because for each value $d$, the corresponding eigenvectors specify the linear subspace capturing the maximum variance of the input data. This is shown in Figure 5, which shows a graph 500 of dimensionality d of the PCA plotted against VMAF for an example asset for three different distances to the camera: far (green), middle (orange), and near (blue). Figure 5 shows that assets that are further away from the camera indeed require fewer principal components to attain a target visual quality. In other words, by scaling down d we can assure that $b_{pca}(a) < b_{vid}(a)$ while maintaining perceptual quality.

A second scenario involves occlusions. If one asset completely occludes another asset then rendering the asset on the server 110 will not contribute video bitrate, i.e., $b_{vid}(a) = 0 < b_{pca}(a)$. This can be solved by using occlusion awareness in streaming: that is, PCA weights do not need to be streamed if the asset is occluded. An approximate but simple way for detecting occlusions between assets is to measure the intersection of their bounding boxes, for example.

Since the dimensionality of the PCA-compressed control weights is constant for each asset, $b_{pca}$ is a constant term across time for a given asset. In contrast, evaluation of the functions $b_{vid}$ and c typically requires knowledge of future bitrates which are generally not known and have to be estimated. As a consequence of using estimators, bitrate and compute time estimates will not be exact. Consistent underestimations of c can prohibit the user device 120 from finishing all computations in time, leading to jitter or frame drops. To address this problem, the constraint in Equation 2 may be relaxed. In particular, a separate series of adaptive thresholds $\theta_t$ is introduced in order to deal with potential systematic biases in the estimators. For instance, if c systematically underestimates the compute cost, this is compensated by enforcing $\theta_t < \theta_t$. The optimization problem is therefore modified to the following (Equation 3):

$$\text{minimize} \quad b_{vid}(\mathcal{A}_{server,t}) + b_{pca}(\mathcal{A}_{client,t})$$

$$\text{subject to} \quad c(\mathcal{A}_{client,t}) \le \theta_t$$

$$\mathbb{E}_{t-1,t-2,\ldots}[\,c(\mathcal{A}_{client,t})\,] \le \Theta_t$$

where it is assumed that exact compute times for past frames are available and the expectation is taken over the past frames. Exact compute times can be obtained with a simple timer function on the client side. The constraint

$$\mathbb{E}_{t-1,t-2,\dots}[\, c(\mathcal{A}_{client,t})\,] \leq$$

$\theta_t$ assures that the compute target is met in expectation, whereas using $\theta_t$ for the optimization deals with estimator bias. If the estimator bias is unknown, then the initialization is simply $\theta_0 = \Theta_0$. The bitrate minimization is enforcing a tight approximation of the compute bound $\Theta_t$, since a decrease in bitrate will involve an increase in compute time at the client side (since more assets are rendered on the client).

A client-server REVI streaming system is now described. Game/VR assets and their principal components are either delivered offline, e.g., shipped together with the client software or in the form of an offline software update, or streamed asynchronously. During online operation, Algorithm 1 runs on the client device 120 along with a scheduling algorithm for $\theta_t$, whereas instantiations of the estimators $b_{vid}$ and c run on the server 110.

In terms of estimates for $b_{vid}$ and c, random forests (RF) are used. Alternatively, support vector machines (SVMs) with a radial basis function kernel may be used, although RF may provide better performance than SVMs. These models are merely examples, however, and any machine learning model may be used to perform the estimates for $b_{vid}$ and c. For a given asset, a bounding box, location, rotation, blendshape or rigging weights, as well as camera location and rotation for the past 5 frames of several training scenes, were used as features. It will be understood that not all of these features are required in every embodiment. The target values to be inferred are the mean bitrate (kbps) and compute time (seconds) for the next set of frames, e.g. 120 frames. The training scenes comprise the asset in front of a neutral background at various camera locations, distances, paths, and multiple asset animations. The animations are then exported as videos and encoded, e.g. using a low-latency HEVC encoder or other types of encoder, in order to estimate the bitrate.

To derive $\theta_t$, an additive-increase / multiplicative-decrease (AIMD) algorithm is used. AIMD is a feedback control mechanism adapted for the control of $\theta_t$ as follows (Equation 4):

$$\theta_t = \begin{cases} \theta_{t-1} + a \ \text{if} \ \mathbb{E}[\, c(\mathcal{A}_{client,t})] < \Theta_t \\ \theta_{t-1} \cdot b \ \ \text{if} \ \mathbb{E}[\, c(\mathcal{A}_{client,t})] \geq \Theta_t \end{cases}$$

with the initialization $\theta_0 = \Theta_0$. The hyperparameters $a > 0$ and $0 < b < 1$ determine the magnitude of the additive increase and multiplicative decrease, respectively. The expectation is estimated over a window of past frames $t - 1, t - 2, \dots$ using a moving average. The current values for $b_{vid}$ and c are provided by the server 110.

To allow the user device 120 to select which assets are to be rendered locally (on the user device 120) and which assets are to be rendered by the server 110, a manifest file is periodically sent from the server 110 to the user device 120. The period of the manifest refreshing (i.e. a new manifest file being sent) may be selected depending on the specific application, e.g. per change of scene, every few seconds, etc. In the REVI streaming framework, the server 110 provides the user device 120 with sufficient information to run Algorithm 1 (shown in Figure 4) and select which assets are to be rendered by the server 110 and which are to be sent as PCA-compressed control weights. To this end, the server 110 may send a manifest file before each decision time point. The manifest file provides a list of asset IDs followed by their compute and bitrate estimates from machine learning estimators, as discussed above. The following example lists five character assets in addition to a background asset, and the assets are provided from front to back, such that the user device 120 considers the assets closest to the camera first:

```
#vf-actor1 0.1 23.2
#vf-actor2 0.05 19.1
#vf-actor3 0.03 15.5
#vf-actor4 0.01 11.01
#vf-actor5 0.011 12.1
#background 0.3 189.1
```

The first number in each row is an estimate of the computing resources required to render the given scene asset locally on the user device 120, and the second number in each row is an estimate of the bitrate required to send to the user device 120 an encoded video of the scene asset rendered on the server 110. If, for instance, the user device 120 has a compute budget of 0.2, it could request the server 110 to send the first three assets as control weights (at a total compute cost of 0.18) and receive the remaining assets as server-rendered video. In some examples, for improved usage of the server's compute estimates, meta information on the server's CPU and GPU capabilities may be provided to enable the user device 110 to translate server compute cost into its own compute capabilities.

Accordingly, the user device 120 makes a request to the server 110, specifying which assets should be sent as PCA-compressed weights and which should be rendered by the server 110 (or by another server). These client requests may be sent once for a given interval, e.g., once every 120 frames. At the beginning of each interval, the user device 120 cycles through the following REVI streaming steps as follows: 1) receive manifest file from the server 110; 2) update $\theta_t$ using AIMD in Equation 4; 3) run Algorithm 1 to determine $\mathcal{A}_{server}$ and $\mathcal{A}_{client}$; 4) send request to server 110 to render assets in $\mathcal{A}_{server}$ and to send assets in $\mathcal{A}_{client}$ as PCA-compressed control weights; 5) receive video frames for assets in $\mathcal{A}_{server}$ and render assets in $\mathcal{A}_{client}$ locally; 6) combine video frames with locally rendered assets and display them on screen.

Runtime complexity is estimated as follows. The update of $\theta_t$ involves a single addition or multiplication. For Algorithm 1, addition and set insertion / removal operations cost $\mathcal{O}$ (1). The for loop is executed at most $A = |\mathcal{A}_{frust}|$ times leading to $\mathcal{O}$ (A). The evaluation of c via a random forest with $T$ trees and depth D and yields $\mathcal{O}$ ($A \cdot T \cdot D$). The dominating factor is $\mathcal{O}$ ($A \cdot T \cdot D$). Since $T$ and $D$ are fixed hyperparameters, the runtime complexity increases linearly with the number of assets and is negligible in comparison to encoding/decoding and rendering of the assets.

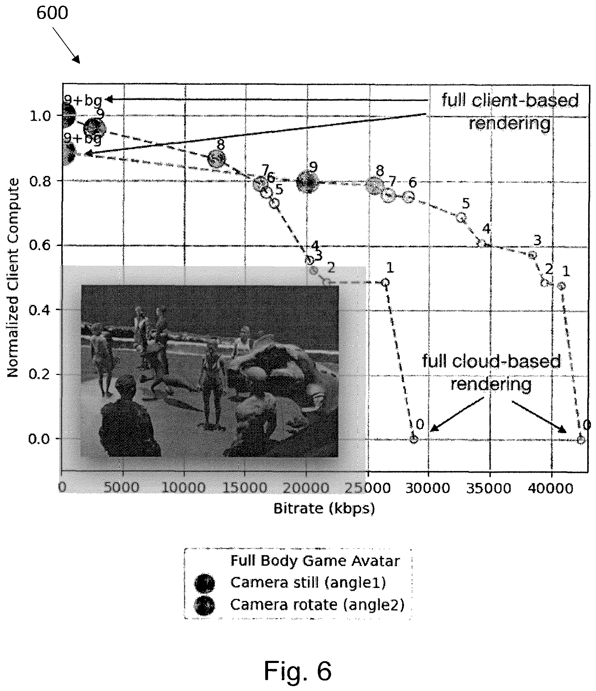

Figure 6 shows a graph 600 of bitrate vs normalized client compute times for an example scene with a total of nine characters and background. Bitrate and compute times are an average across all frames of a video clip. The number next to each data point specifies the number of characters rendered on the client device 120, where 9+bg indicates full client-based rendering, and 0 indicates full server-based rendering. Colour is used to depict the camera path for the corresponding video (blue = still camera, orange = rotating camera). As shown in Figure 6, splitting the rendering effort between the client device 120 and the server 120 allows for a more fine-grained trade-off between bitrate and client compute time. The inlet in Figure 6 shows a screenshot of the example scene.

Embodiments disclosed herein provide a process for streaming a rendered background from the server 110 to the user device 120. In the case the server 110 renders the background and streams to the client device 120, the amount of data transmitted can be reduced by removing areas that it is known will be overwritten by the client device 120. To do this, the server 110 generates a mask representing the content the client device 120 will render and removes (e.g. setting to zero or to some background set of values) those areas from the background before the background is streamed. This is practical because the server 110 is not required to render the full content. Instead, the server 110 rasterizes a mask that represents the pixels the client 120 will update (e.g. no lighting and shading is required). The mask may be processed before being applied to the background. In particular, a foreground asset will be rendered on the client device 120 with the background that will be rendered on the server 110. First, the foreground object is rasterized on the server 110, e.g. with no lighting or shading, to create a mask. Then, to make the process more robust and avoid adding entropy to the image by adding small masked regions, a series of erosion operations are performed on the mask, so as to remove small details. This process can be repeated and adapted to avoid small and thin areas as needed. The resulting eroded mask is inverted and can be bitwise ANDed with the background. The result is then streamed to the client device 120. In embodiments, this process makes a small guard-band around the object; this can handle small differences in pixel rendering between the server 110 and the client device 120. This process can be enabled or disabled based on the specific cost of creating the masks, which can be measured and/or estimated. In addition, if the total final mask area is very small (e.g. less than 2% of the image) it may be preferable not to use the masking process. Any suitable method that provides an estimate of the saving provided by the mask can be applied. The control parameters for the process (e.g. how much erosion to apply, whether to use the process or not, etc.) can be gathered during a development and testing phase and stored in a manifest associated with the game.

The embodiments described herein are applicable to batch processing, i.e. processing a group of images or video frames together without delay constraints (e.g. an entire video sequence), as well as to stream processing, i.e. processing only a limited subset of a stream of images or video frames, or even a select subset of a single image, e.g. due to delay or buffering constraints.

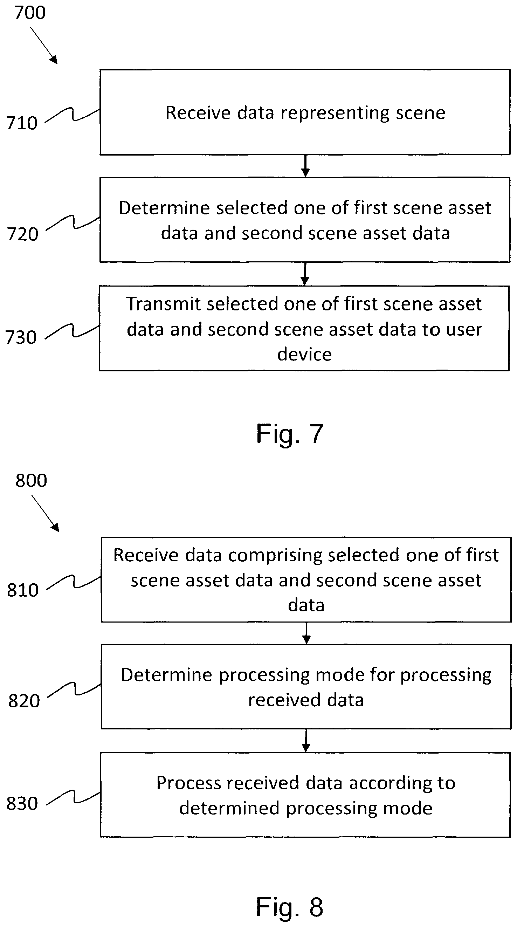

Figure 7 shows a method 700 for generating a rendered image of a scene. The scene comprises one or more scene assets. The method 700 is performed at a server operable to communicate with a user device. For example, the method 700 may be performed at least in part by the server 110 described above with reference to Figure 1. The method 700 may be performed at least in part by hardware and/or software.

At item 710, data is received, the data representing a scene. The scene includes a scene asset to be rendered.

At item 720, a selected one of first scene asset data and second scene asset data to transmit to the user device 120 is determined. The first scene asset data is useable by the user device 120 to render the scene asset. The second scene asset data represents a rendering of the scene asset generated by the server 110. The selection is performed on the basis of a resource characteristic of the user device 120.

At item 730, the selected one of the first scene asset data and the second scene asset data is transmitted to the user device 120, to enable the user device 120 to generate a rendered image of the scene.

In embodiments, the determining at item 720 comprises receiving, from the user device 120, selection data indicating the selected one of the first scene asset data and the second scene asset data.

In embodiments, the resource characteristic of the user device 120 comprises one or more of: processing resources of the user device 120, memory resources of the user device 120, and bandwidth resources available to the user device 120.

In embodiments, the method 700 comprises transmitting, to the user device 120, a manifest file comprising an indication of the first scene asset data and/or the second scene asset data, wherein the first scene asset data or the second scene asset data is selected using the manifest file.

In embodiments, the manifest file comprises an indication of one or more resources required for rendering the scene asset at the user device 120 using the first scene asset data and/or an indication of one or more resources required for receiving, from the server 110, the second scene asset data.

In embodiments, the one or more resources required for rendering the scene asset using the first scene asset data and/or the one or more resources required for receiving the second scene asset data comprise one or more of: processing resources, memory resources and/or bandwidth resources.

In embodiments, the manifest file comprises an indication of one or more resources required for receiving, from the server 110, the first scene asset data.

In embodiments, the first scene asset data is indicative of a configuration of the scene asset in the scene. The configuration comprises one or more of: orientation, position, movement, appearance, perspective, lighting and/or viewpoint of the scene asset.

In embodiments, the first scene asset data is indicative of animation control weights for the scene asset.

In embodiments, the first scene asset data comprises a compacted set of animation control weights, wherein the compaction is based on principal component analysis, PCA.

In embodiments, the scene asset comprises a rigged three-dimensional model of an object. In some such embodiments, the first scene asset data is indicative of a set of rig control weights for controlling a movement and/or position of the rigged three-dimensional model.

In embodiments, the first scene asset data is indicative of a set of blendshape control weights.

In embodiments, the second scene asset data comprises encoded image data obtained by encoding the rendering of the scene asset.

In embodiments, the scene asset is a first scene asset, and the scene further comprises a second scene asset to be rendered. In some such embodiments, if the server 110 transmits the first scene asset data to the user device 120, the method 700 comprises transmitting, to the user device 120, data representing a rendering of the second scene asset generated by the server 110. Similarly, if the server 110 transmits the second scene asset data to the user device 120, the method 700 may comprise transmitting, to the user device 120, data useable by the user device 120 to render the second scene asset.

In embodiments, the selection is performed using a water-filling algorithm.

In embodiments, the selection is performed on the basis of a position of the scene asset in the scene.

In embodiments, the method 700 comprises determining, based on a perceptual quality score, a dimensionality of the first scene asset data.

In embodiments, the scene comprises a video game scene. In some such embodiments, the data representing the scene is received from a video game engine running on the server 110.

In embodiments, the method 700 comprises generating, at the server 110, a rendering of a background of the scene, and transmitting, to the user device 120, data representing the rendering of the background of the scene by the server.

In embodiments, the method 700 comprises generating an image mask corresponding to the scene asset, and excluding the image mask from the rendering of the background of the scene.

Figure 8 shows a method 800 for generating a rendered image of a scene, the scene comprising one or more scene assets. The method 800 is performed at a user device operable to communicate with a server. For example, the method 800 may be performed at least in part by user device 120 described above with reference to Figure 1. The method 800 may be performed at least in part by hardware and/or software.

At item 810, data for a scene asset of the scene is received from the server 110. The data comprises a selected one of first scene asset data and second scene asset data. The first scene asset data is useable by the user device 120 to render the scene asset. The second scene asset data represents a rendering of the scene asset generated by the server 110. The selection is performed on the basis of a resource characteristic of the user device 120.

At item 820, it is determined, based on the received data, to process the received data according to a first processing mode of the user device 120 or a second processing mode of the user device 120. The first processing mode comprises rendering the scene asset using the first scene asset data. The second processing mode comprises obtaining, using the second scene asset data, the rendering of the scene asset generated by the server 110.

At item 830, the received data is processed according to the determined processing mode to generate a rendered image of the scene.

In embodiments, the method 800 comprises, prior to receiving the data for the scene asset, determining, at the user device 120, the selected one of the first scene asset data and the second scene asset data to be transmitted to the user device 120. As such, the user device 120 may select which of the first scene asset data and the second scene asset data should be transmitted from the server 110 to the user device 120.

In embodiments, the method 800 comprises transmitting, to the server 110, selection data indicating the selected one of the first scene asset data and the second scene asset data.

In embodiments, the resource characteristic of the user device 120 comprises one or more of: processing resources of the user device, memory resources of the user device 120, and bandwidth resources available to the user device 120.

In embodiments, the method 800 comprises receiving, from the server 110, a manifest file comprising an indication of the first scene asset data and/or an indication of the second scene asset data. The first scene asset data or the second scene asset data is selected using the manifest file.

In embodiments, the manifest file comprises an indication of one or more resources required for rendering the scene asset at the user device 120 using the first scene asset data and/or an indication of one or more resources required for receiving, from the server 110, the second scene asset data. In embodiments, the manifest file comprises an indication of processing and/or memory resources required for rendering the scene asset at the user device 120 using the first scene asset data and/or an indication of bandwidth resources required for receiving, from the server 110, the second scene asset data. In embodiments, the manifest file comprises an indication of one or more resources required for receiving, from the server 110, the first scene asset data. For example, the manifest file may comprise an indication of bandwidth resources required for receiving the first scene asset data.

In embodiments, the selection is based on a comparison between the processing and/or memory resources required for rendering the scene asset indicated in the manifest file and processing and/or memory resources of the user device 120. Additionally or alternatively, the selection is based on a comparison between the bandwidth resources required for receiving the second scene asset data indicated in the manifest file and bandwidth resources available to the user device 120.

In embodiments, the scene asset is a first scene asset, and the scene further comprises a second scene asset to be rendered. In some such embodiments, if the user device 120 receives the first scene asset data, the method 800 comprises receiving, from the server 110, data representing a rendering of the second scene asset generated by the server 110. Similarly, if the user device 120 receives the second scene asset data, the method 800 may comprise receiving, from the server 110, data useable by the user device 120 to render the second scene asset.

In embodiments, the method 800 comprises receiving, in an initial or offline stage, the scene asset, and storing the scene asset in storage of the user device 120.

In embodiments, the second processing mode comprises decoding the received data to obtain the rendering of the scene asset generated by the server 110.

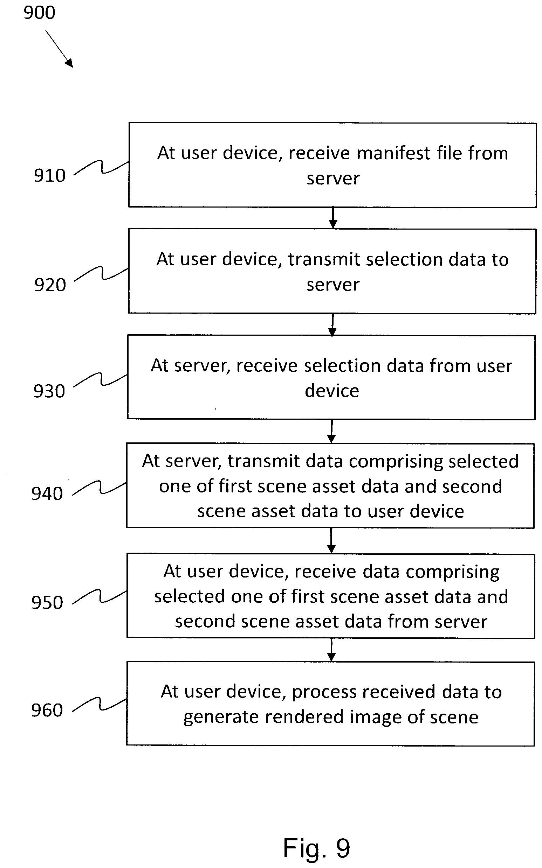

Figure 9 shows a method 900 for generating a rendered image of a scene, the scene comprising one or more scene assets. The method 900 is performed by a server and a user device operable to communicate with one another. For example, the method 900 may be performed at least in part by the user device 120 and/or the server 110 described above with reference to Figure 1. The method 900 may be performed at least in part by hardware and/or software.

At item 910, at the user device 120, a manifest file of the scene is received from the server 110. The scene includes a scene asset to be rendered. The manifest file indicates first scene asset data and/or second scene asset data. The first scene asset data is useable by the user device 120 to render the scene asset. The second scene asset data represents a rendering of the scene asset generated by the server 110.

At item 920, at the user device 120, selection data is transmitted to the server 110. The selection data indicates a selected one of the first scene asset data and the second scene asset data. The selection is performed on the basis of a resource characteristic of the user device 120.

At item 930, at the server 110, the selection data is received from the user device 120.

At item 940, at the server 110, data for the scene asset is transmitted to the user device 120. The data for the scene asset comprises the selected one of the first scene asset data and the second scene asset data.

At item 950, at the user device 120, the data for the scene asset is received from the server 110.

At item 960, at the user device 120, the data for the scene asset is processed to generate a rendered image of the scene.

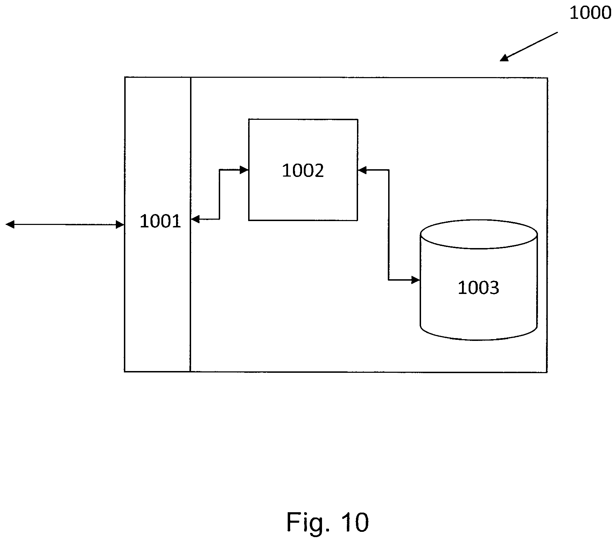

Embodiments of the disclosure include at least some of the methods described above performed on a computing device, such as the computing device 1100 shown in Figure 10. The computing device 1000 comprises a data interface 1001, through which data can be sent or received, for example over a network. The computing device 1000 further comprises a processor 1002 in communication with the data interface 1001, and memory 1003 in communication with the processor 1002. In this way, the computing device 1000 can receive data, such as image data, video data, or various data structures, via the data interface 1001, and the processor 1002 can store the received data in the memory 1003, and process it so as to perform the methods described herein, including processing data and/or generating images. At least some of the methods described herein may be performed by a computing system comprising one or more such computing devices 1000. For example, one such computing device 1000 may comprise or be comprised in the server 110, and another such computing device 1000 may comprise or be comprised in the user device 120.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

The present disclosure provides methods for joint video streaming and rendering, using a perceptually-optimized compaction of animation control weights. The compaction is based on principal component analysis (PCA). PCA allows for: (i) compaction with no impact on perceptual quality of the rendered frames at the client side and (ii) inherent rate/accuracy scalability, i.e., increased quality with increased number of retained dimensions. While other approaches (e.g. autoencoders) may be used, such other approaches cannot provide such scalability without the use of multiple trained models. An adaptive approach is provided that dynamically assigns assets to client-side vs server-side rendering in real-time according to current compute and bandwidth budgets and targets. This is achieved by streaming perceptually-optimized compact representations of animation control weights to the client in conjunction with select video segments, thereby creating an adaptive render-video (REVI) streaming framework. Such an approach allows for substantial trade-offs between client rendering time and the bitrate required to stream visually-lossless video from the server to the client. Since local rendering of the entire scene cannot be guaranteed, offline estimation of the encoding bitrate and the rendering time of all scene assets is carried out. This allows for the derivation of rendering time vs bitrate estimates, which can be used during real-time REVI streaming. Based on these estimates, dynamic bitrate-based or render-time based adaptation is used, based on the use of AIMD (additive-increase/multiplicative decrease). The server can then deliver each component as compact animation control weights, or as video, according to constraints on client rendering time or bitrate. This allows for REVI streaming to deliver significant benefits in bitrate by transferring some of the rendering time to the client device in an optimized manner, while keeping the state synchronization entirely at the server side. The client can adapt its estimates based on adaptive resource estimation, which leads to increased compliance to rendering time or bitrate constraints. Experiments based on typical sets of G&VR scenes rendered in Blender or Unity and HEVC low-latency encoding show that when the client is providing for 50% of the rendering time over 60% average bitrate saving is achieved versus streaming the entire scene to the client as video. This translates into an improved user experience and decreased latency, especially since the client can render characters while video is being decoded and then superimpose the rendered characters in the decoded video.

While the present disclosure has been described and illustrated with reference to particular embodiments, it will be appreciated by those of ordinary skill in the art that the disclosure lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

## Claims

1. A computer-implemented method for generating a rendered image of a scene, the scene comprising one or more scene assets, the method comprising, at a server operable to communicate with a user device:

   receiving data representing a scene, the scene including a scene asset to be rendered;
   determining a selected one of first scene asset data and second scene asset data to transmit to the user device, the first scene asset data being useable by the user device to render the scene asset, the second scene asset data representing a rendering of the scene asset generated by the server, wherein the selection is performed on the basis of a resource characteristic of the user device; and
transmitting, to the user device, the selected one of the first scene asset data and the second scene asset data, to enable the user device to generate a rendered image of the scene.

2. A method according to claim 1, wherein the determining comprises receiving, from the user device, selection data indicating the selected one of the first scene asset data and the second scene asset data.

3. A method according to any preceding claim, the method comprising transmitting, to the user device, a manifest file comprising an indication of the first scene asset data and/or the second scene asset data, wherein the first scene asset data or the second scene asset data is selected using the manifest file.

4. A method according to claim 3, wherein the manifest file comprises an indication of one or more resources required for rendering the scene asset at the user device using the first scene asset data and/or an indication of one or more resources required for receiving, from the server, the second scene asset data,
wherein the one or more resources required for rendering the scene asset using the first scene asset data and/or the one or more resources required for receiving the second scene asset data comprise one or more of: processing resources, memory resources and/or bandwidth resources.

5. A method according to any preceding claim,

wherein the scene asset is a first scene asset,
wherein the scene further comprises a second scene asset to be rendered, wherein, if the server transmits the first scene asset data to the user device, the method comprises transmitting, to the user device, data representing a rendering of the second scene asset generated by the server, and
wherein, if the server transmits the second scene asset data to the user device, the method comprises transmitting, to the user device, data useable by the user device to render the second scene asset.

6. A method according to any preceding claim, the method comprising:

generating, at the server, a rendering of a background of the scene; and
transmitting, to the user device, data representing the rendering of the background of the scene generated by the server,

and wherein the method comprises:

generating an image mask corresponding to the scene asset; and
excluding the image mask from the rendering of the background of the scene.

7. A computer-implemented method for generating a rendered image of a scene, the scene comprising one or more scene assets, the method comprising, at a user device operable to communicate with a server:

receiving, from the server, data for a scene asset of the scene, the data comprising a selected one of first scene asset data and second scene asset data, the first scene asset data being useable by the user device to render the scene asset, the second scene asset data representing a rendering of the scene asset generated by the server, wherein the selection is performed on the basis of a resource characteristic of the user device;
determining, based on the received data, to process the received data according to a first processing mode of the user device or a second processing mode of the user device, the first processing mode comprising rendering the scene asset using the first scene asset data, the second processing mode comprising obtaining, using the second scene asset data, the rendering of the scene asset generated by the server; and
processing the received data according to the determined processing mode to generate a rendered image of the scene.

8. A method according to claim 7, the method comprising, prior to receiving the data for the scene asset, determining, at the user device, the selected one of the first scene asset data and the second scene asset data to be transmitted to the user device.

9. A method according to claim 7 or claim 8, the method comprising transmitting, to the server, selection data indicating the selected one of the first scene asset data and the second scene asset data.

10. A method according to any of claims 7 to 9, the method comprising:

> receiving, in an initial or offline stage, the scene asset; and
> storing the scene asset in storage of the user device.

11. A method according to any preceding claim, wherein the first scene asset data is indicative of animation control weights for the scene asset.

12. A method according to any preceding claim, wherein the first scene asset data comprises a compacted set of animation control weights, wherein the compaction is based on principal component analysis, PCA.

13. A method according to any preceding claim, wherein the resource characteristic of the user device comprises one or more of: processing resources of the user device, memory resources of the user device, and bandwidth resources available to the user device.

14. A computing system comprising:

> one or more processors; and
> memory,
> wherein the computing system is arranged to perform, using the one or more processors, a method according to any preceding claim.

15. A computer program product arranged, when executed on a computing system comprising one or more processors and memory, to cause the computing system to perform, using the one or more processors, a method according to any of claims 1 to 13.

100

110

130

120

Fig. 1

Fig. 2

EP 4 624 008 A1

300

Fig. 3

---

**Algorithm 1** REVI water-filling algorithm

---

**Require:** $\forall a \in \mathcal{A}_{\text{frust}} : b_{\text{pca}}(a) < b_{\text{vid}}(a)$

$\quad \mathcal{A}_{\text{server}} \leftarrow \mathcal{A}_{\text{frust}}$

$\quad \mathcal{A}_{\text{client}} \leftarrow \emptyset$

$\quad \text{total\_compute} \leftarrow 0$

$\quad \textbf{for } a \in \text{sorted}(\mathcal{A}_{\text{frust}}) \textbf{ do}$                ▷ sort by distance

$\quad\quad \textbf{if } \text{total\_compute} + c(a) \leq \theta_t \textbf{ then}$

$\quad\quad\quad \text{total\_compute} \leftarrow \text{total\_compute} + c(a)$

$\quad\quad\quad \mathcal{A}_{\text{server}} \leftarrow \mathcal{A}_{\text{server}} \setminus \{a\}$

$\quad\quad\quad \mathcal{A}_{\text{client}} \leftarrow \mathcal{A}_{\text{client}} \cup \{a\}$

$\quad\quad \textbf{else}$

$\quad\quad\quad \text{break}$

$\quad\quad \textbf{end if}$

$\quad \textbf{end for}$

---

Fig. 4

Fig. 5

Fig. 6

700

| 710 | Receive data representing scene |

| 720 | Determine selected one of first scene asset data and second scene asset data |

| 730 | Transmit selected one of first scene asset data and second scene asset data to user device |

## Fig. 7

800

| 810 | Receive data comprising selected one of first scene asset data and second scene asset data |

| 820 | Determine processing mode for processing received data |

| 830 | Process received data according to determined processing mode |

## Fig. 8

900

At user device, receive manifest file from server

910

At user device, transmit selection data to server

920

At server, receive selection data from user device

930

At server, transmit data comprising selected one of first scene asset data and second scene asset data to user device

940

At user device, receive data comprising selected one of first scene asset data and second scene asset data from server

950

At user device, process received data to generate rendered image of scene

960

Fig. 9

1000

1001

1002

1003

Fig. 10

Europäisches
Patentamt

European
Patent Office

Office européen
des brevets

# EUROPEAN SEARCH REPORT

**Application Number**

EP 24 38 6033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/144442 A1 (HINDS ARIANNE [US] ET AL) 11 May 2023 (2023-05-11) * abstract; figures 1, 2a, 2b * * paragraphs [0061], [0065] * * paragraphs [0066], [0069] * * paragraphs [0072], [0075] * ----- | 1-15 | INV. A63F13/355 G06T15/00 |
| A | US 2023/224512 A1 (WANG XIN [US] ET AL) 13 July 2023 (2023-07-13) * abstract * * paragraphs [0002], [0019] * * paragraphs [0058] - [0060] * * paragraphs [0077], [0080], [0081] * ----- | 1-15 | |
| A | EP 2 184 092 B1 (DISNEY ENTPR INC [US]) 1 December 2021 (2021-12-01) * abstract; figures 1-4 * * paragraphs [0013] - [0020] * ----- | 1-15 | |

**TECHNICAL FIELDS SEARCHED (IPC)**

G06T
A63F

The present search report has been drawn up for all claims

| Place of search | Date of completion of the search | Examiner |
|---|---|---|
| The Hague | 10 September 2024 | Tito Martins, José |

EPO FORM 1503 03.82 (P04C01)

## ANNEX TO THE EUROPEAN SEARCH REPORT
## ON EUROPEAN PATENT APPLICATION NO.

EP 24 38 6033

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2024

| Patent document cited in search report | Publication date | Patent family member(s) | Publication date |
|---|---|---|---|
| US 2023144442 A1 | 11-05-2023 | CN 116711285 A | 05-09-2023 |
| | | EP 4427439 A1 | 11-09-2024 |
| | | JP 2024509182 A | 29-02-2024 |
| | | KR 20230119018 A | 14-08-2023 |
| | | US 2023144442 A1 | 11-05-2023 |
| | | WO 2023081033 A1 | 11-05-2023 |
| US 2023224512 A1 | 13-07-2023 | CN 116437118 A | 14-07-2023 |
| | | TW 202337221 A | 16-09-2023 |
| | | US 2023224512 A1 | 13-07-2023 |
| EP 2184092 B1 | 01-12-2021 | EP 2184092 A2 | 12-05-2010 |
| | | JP 5040030 B2 | 03-10-2012 |
| | | JP 2010113719 A | 20-05-2010 |
| | | US 2010115022 A1 | 06-05-2010 |

EPO FORM P0459

For more details about this annex : see Official Journal of the European Patent Office, No. 12/82